# EUROPEAN PATENT APPLICATION

(11) **EP 3 664 250 A1**
(43) Date of publication of application: **10.06.2020**
(21) Application number: 19208385.5
(22) Date of filing: 11.11.2019
(51) Int. Cl.: H02J 7/00, H01L 27/00

(54) **CHARGING DEVICE**

(30) Priority: 03.12.2018 JP 2018226756
(71) Applicant: Valeo Japan Co., Ltd., Saitama 360-0193 (JP)
(72) Inventor: TAMOTO, Yasumitsu, Tokyo, 143-8521 (JP)
(74) Representative: Oppermann, Frank

(57) **Abstract**

A charging device 1 includes charging circuits 10A, 10B that supply a charging current to a battery 71 (a charged body) in an electric equipment 7, a plurality of circuit components IC that are located on a substrate 16 and configure the charging circuits 10A, 10B, a thermistor 15 located on a heat transmission path of the substrate 16 from a heat generation source HIC to the other circuit component IC, and a USB controller 14 that limits the supply of the charging current to the electric equipment 7 when a temperature detected by the thermistor 15 exceeds a threshold value. A charging device 1 prevents damage by detecting a temperature rise of a circuit component.

## Description

### BACKGROUND OF THE INVENTION

### Field of the Invention

The present invention relates to a charging device.

### Description of the Related Art

There is proposed a charging device that charges a battery in electric equipment of a smartphone or the like by supplying current to the battery in the electric equipment from a power source of a battery in an automobile or the like. The charging device is configured by a plurality of circuit components located on a substrate, but a circuit component of a DC to DC converter or the like thereof may possibly generate heat due to power loss at the charging. When a temperature of each of the circuit components exceeds the maximum junction temperature by the generated temperature, there is a possibility that the circuit component is damaged. For preventing this, thermistors are located on the substrate, and in a case where a temperature to be detected by the thermistor exceeds a threshold value, the charging current is controlled (for example, refer to Japanese Patent Laid-Open No. 2012-5288 A).

However, since the heat of the heat generation source is transmitted on the substrate, the rise in temperature of each of the circuit components changes with a condition of a distance from the heat generation source or the like. Therefore, an atmosphere temperature of the substrate can be detected by locating the thermistors on the substrate, but a junction temperature of each of the circuit components is possibly higher than the atmosphere temperature of the substrate. Since the maximum junction temperature in some circuit components is relatively low, there is a possibility that the damage of the circuit component cannot be prevented by the temperature detection of the thermistor.

### SUMMARY OF THE INVENTION

The present invention is made in view of the foregoing problems in the conventional technology, and an object of the present invention is to detect a temperature rise of a circuit component in a charging device to prevent damage of the circuit component and improve reliability of the charging device.

According to an aspect of the present invention, a charging device comprises:
a charging circuit that supplies a charging current to a charged body;
a plurality of circuit components that are located on a substrate and configure the charging circuit;
a temperature detecting element located on a heat transmission path of the substrate from the circuit component of a heat generation source to the other circuit component; and
a control part that limits the supply of the charging current to the charged body when a temperature detected by the temperature detecting element exceeds a threshold value.

According to the aspect of the present invention, the temperature rise of the circuit component generated by transmission of heat onto the substrate from the heat generation source can be detected by locating the temperature detecting element on the heat transmission path from the circuit component of the heat generation source to the other circuit component on the substrate. By limiting the supply of the charging current in accordance with the detection result of the temperature detecting element, the damage of the circuit component can be prevented to improve the reliability of the charging device.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
Fig. 1 is a block diagram showing a schematic configuration of a charging device according to a first embodiment of the present invention;
Fig. 2 is a block diagram showing a configuration of a charging circuit in the charging device;
Fig. 3 is a diagram showing region division of a substrate according to the first embodiment;
Fig. 4 is a diagram showing temperature detection of a thermistor according to a comparative example;
Fig 5 is a diagram showing temperature detection of thermistors according to the first embodiment;
Fig. 6 is a diagram showing region division of a substrate according to a modification 2;
Fig. 7 is a block diagram showing a configuration of a charging device according to a modification 3;
Fig. 8 is a block diagram showing a configuration of a charging circuit according to a third embodiment;
Fig. 9A is a graph showing an example of a ripple voltage of a smoothing capacitor at the normal time; and
Fig. 9B is a graph showing an example of a ripple voltage of the smoothing capacitor at the degradation time and pulse signals outputted from a comparator.

### DESCRIPTION OF THE PREFERRED EMBODIMENT

### <First Embodiment>

Hereinafter, an explanation will be made of a charging device 1 according to a first embodiment of the present invention with reference to the accompanying drawings.

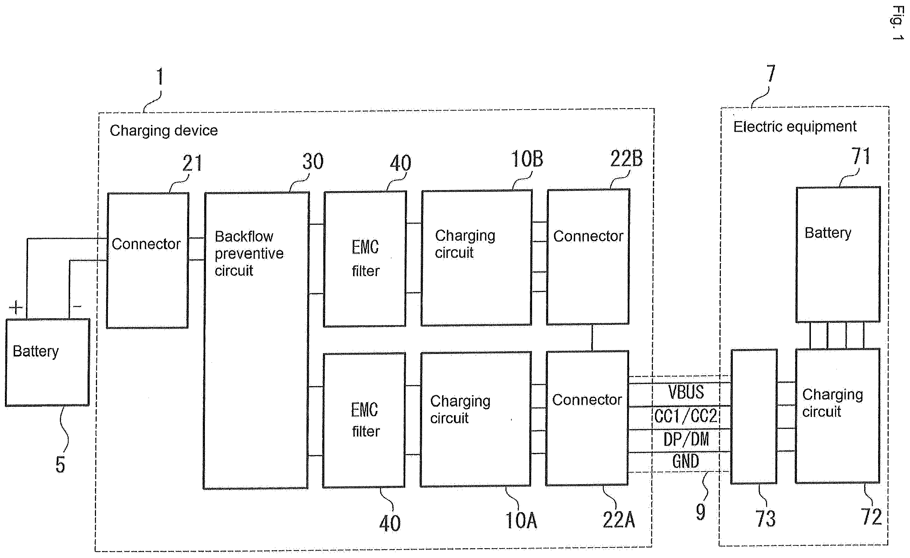

Fig. 1 is a block diagram showing a configuration of a charging device 1 according to the first embodiment.

The charging device 1 is mounted on an automobile, for example, and supplies power of a battery 5 in the automobile to a battery 71 of electric equipment 7 of a mobile phone, a smartphone, a note PC or the like for charging.

As shown in Fig. 1, the charging device 1 is provided with charging circuits 10A, 10B that convert a voltage of the battery 5 in the automobile to be supplied to the electric equipment 7. The charging circuits 10A, 10B are located on an unillustrated substrate and are accommodated in an inner part of an unillustrated case. A connector 21 as a connecting terminal to the battery 5 in the automobile, and connectors 22A, 22B as connecting terminals to the electric equipment 7 are attached to the case. The connector 21 is connected to the battery 5 in the automobile via a power line. The connectors 22A, 22B can adopt, for example, USB (universal Serial Bus) terminals.

The electric equipment 7 is provided with the battery 71, a charging circuit 72 and a connector 73, and a current of the battery 5 in the automobile is supplied to the battery 71 in the electric equipment 7 by connecting the connector 22A or the connector 22B in the charging device 1 to the connector 73 in the electric equipment 7 via a USB cable 9. A detailed explanation of the configuration of the electric equipment 7 is omitted. The USB cable 9 includes a power source line VBUS, a configuration channel line CC1/CC2, a data communication line DP/DM, a ground line GND and the like.

The charging device 1 is provided with the two connectors 22A, 22B corresponding to the two charging circuits 10A, 10B respectively.

Although omitted in illustration, the connectors 22A, 22B each are provided with a VBUS pin connected to the power source line VBUS of the USB cable 9, a CC pin connected to the configuration channel line CC1/CC2, a GND pin connected to the ground line GND, and the like. The connector 73 in the electric equipment 7 has a configuration similar thereto.

The two connectors 22A, 22B may be composed of connectors corresponding to USB standards different from each other, and, for example, the connector 22A may be a connector corresponding to a USB Type-C and the connector 22B may be a connector corresponding to a USB Type-A. In addition, USB PD (Power Delivery) may be adopted as power feeding standard corresponding to USB Type-C. In USB PD, one of the power source voltages of 5V, 9V, 15V, 20V is selected and supplied in response to a requirement of the electric equipment 7 connected thereto. A charging voltage/current can be set to 3A to 5V, 9V, 15V, and 5A to 20V, and has power feeding capability of the maximum 100W (20V/5A).

It should be noted that the number of connectors in the charging device 1 is not limited to two, but may be one or three or more.

A backflow preventive circuit 30 preventing a backflow of the charging current and an EMC (Electromagnetic Compatibility) filter 40 removing noises of the power line are located between the connector 21 as the connecting terminal to the battery 5 in the automobile and the charging circuits 10A, 10B. The EMC filter 40 comprises two filters corresponding to the charging circuits 10A, 10B respectively. The current of the battery 5 in the automobile that is input from the connector 21 passes through the backflow preventive circuit 30 and the EMC filters 40 and is input to the charging circuits 10A, 10B. The backflow preventive circuit 30, although omitted in illustration, is configured of a switch element such as a power MOSFET or the like, resistances, capacitors, and the like.

Since the two charging circuits 10A, 10B each may basically have the similar configuration, an explanation will be herein made of the configuration of the one charging circuit 10A.

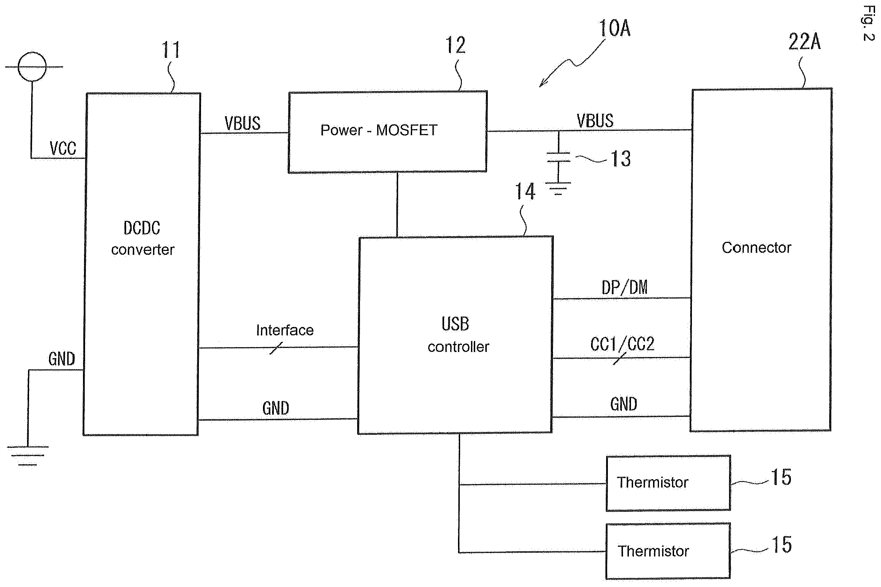

Fig. 2 is a block diagram showing the configuration of the charging circuit 10A.

As shown in Fig. 2, the charging circuit 10A is configured of a plurality of circuit components that are connected through power source lines or communication lines. The circuit components include, for example, a DC to DC converter 11, a power MOSFET (Metal-Oxide-Semiconductor Filed-Effect transistor) 12, a smoothing capacitor 13, a USB controller 14, and the like.

It should be noted that the illustrated circuit components are shown as main examples, and the charging circuit 10A may be provided with other circuit components. For example, the USB controller 14 may be provided with a circuit component formed together with the DC to DC converter 11.

The DC to DC converter 11 converts the voltage of the battery 5 in the automobile to a predetermined voltage for USB charging. The predetermined voltage is determined by the kind of the electric equipment 7 to be connected to the charging device 1 or the power feeding standard of the USB to be adopted, but, for example, the predetermined voltage is converted into 5V, or 5V, 9V, 15V, 20V or the like to be used in the standard of USB PD.

The power MOSFET 12 is connected to the output side of the DC to DC converter 11 via the power source line VBUS. The power MOSFET 12 switches supply and block of the current to the connector 22A from the DC to DC converter 11, as a switch element. A type in which the power MOSFET 12 is incorporated in the DC to DC converter 11 may be adopted.

The smoothing capacitor 15 is connected to the output side of the power MOSFET 12. The smoothing capacitor 13 smoothes a ripple voltage that is outputted by the DC to DC converter 11 with charging/discharging. The voltage smoothed in the smoothing capacitor 13 is outputted to the connector 22A via the power source line VBUS.

The USB controller 14 controls the operations of the circuit components configuring the charging circuit 10A to control the switch between the supply and block of the charging current and the supply amount of the charging current. It should be noted that although omitted in illustration, the USB controller 14 controls the backflow preventive circuit 30 as well (refer to Fig. 1).

The USB controller 14 is connected to the connector 22A via the configuration channel line CC1/CC2, the data communication line DP/DM, the ground line GND and the like. The configuration channel line CC1/CC2 is a communication line for negotiation between the charging device 1 and the electric equipment 7.

Although omitted in illustration, the configuration channel line CC1/CC2 in the charging device 1-side is connected to a pullup resistance connected to the power source, and the configuration channel line CC1/CC2 in the electric equipment 7-side is connected to a pulldown resistance earthed to the ground. The USB controller 14 monitors a voltage of the CC pin to detect whether or not terminal processing is executed in the pulldown resistance in the electric equipment 7-side, thereby making it possible to detect the connection of the electric equipment 7.

When the USB cable 9 (refer to Fig.1) connected to the electric equipment 7 is connected to the connector 22A, the USB controller 14 sends a profile chargeable in the electric equipment 7 via the configuration channel line CC1/CC2. The electric equipment 7 sends request of the charging voltage and the charging current to the charging device 1 after confirmation of the profile. When the negotiation is established, the USB controller 14 controls the DC to DC converter 11 to start with the supply of the charging current in response to the request. The USB controller 14 may produce a table defining the supply amount to the electric equipment 7 at the negotiation.

At the charging, heat is possibly generated in each of the circuit components. Particularly, the DC to DC converter 11 or the power MOSFET 12 tends to be easily a heat generation source by power loss at the time the current passes therethrough. Since the generated heat in the circuit components is transmitted to the other circuit component via the substrate, the junction temperature (a temperature of a chip in the inner part of the circuit component) of the other circuit component also increases.

In each of the circuit components, the maximum junction temperature as the maximum temperature in which the circuit component operates is defined as the standard. When the temperature of the circuit component exceeds the maximum junction temperature by the temperature rise, the circuit component does not possibly operate normally or it possibly leads to damage of the circuit component. Particularly, in a case of adopting the power feeding standard of USB PD described before, since the power feeding of the maximum 100W is performed, there is a tendency that the heat is easily generated. The USB controller 14, for preventing the temperature of each of the circuit components from exceeding the maximum junction temperature, is required to detect a temperature rise of the circuit component and control the supply amount of the charging current.

The charging device 1 is provided with a plurality of thermistors 15 as temperature detecting elements for detecting the temperature rise of the circuit component. The thermistor 15 may adopt, for example, an NTC (Negative Temperature Coefficient) thermistor a resistance of which is the smaller as the temperature is the higher.

A detection signal of the thermistor 15 is input to the USB controller 14.

In the first embodiment, the plurality of thermistors 15 are located on the substrate that are divided into a plurality of regions.

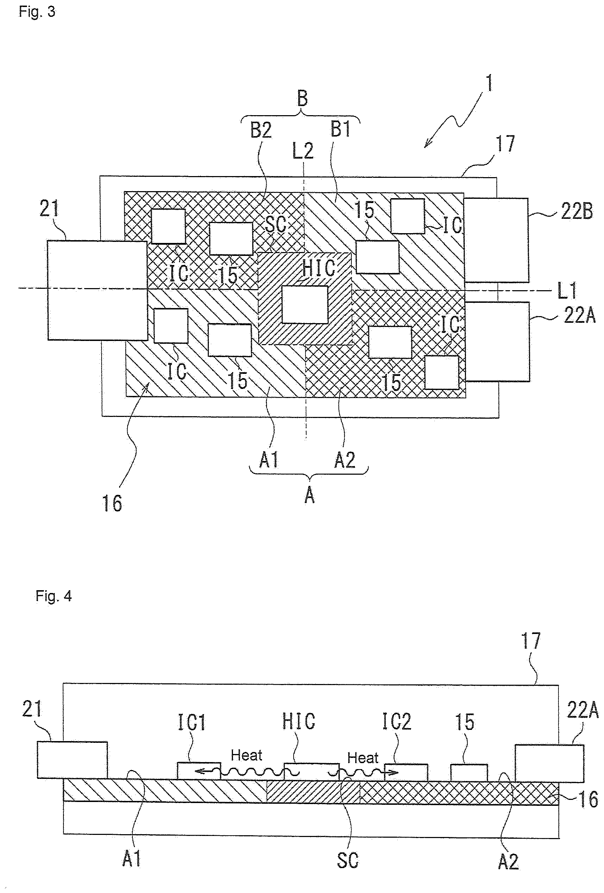

Fig. 3 is a diagram showing region division of the substrate according to the first embodiment.

As described before, there are various kinds of circuit components configuring the charging circuit 10A, and in the explanation in Fig. 3, the circuit components are collectively called "circuit component IC".

As shown in Fig. 3, a substrate 16 is accommodated in the inner part of a case 17, and the connector 21 as a connecting terminal to the battery 5 in the automobile is located in one end side of the case 17 in a longitudinal direction, and the connectors 22A, 22B as connecting terminals to the electric equipment 7 are located in the other end side.

The substrate 16 is divided into a plurality of regions. A substrate central part SC is a region for locating the circuit component IC that is more likely to be a heat generation source. For example, the DC to DC converter 11 is located in the substrate central part SC. The DC to DC converters 11 of both of the charging circuits 10A, 10B can be located in the substrate central part SC, but Fig. 3 shows a state where one circuit component IC is located for descriptive purposes.

Hereinafter, the circuit component IC that is located in the substrate central part SC and becomes the heat generation source is called "heat generation source HIC".

The periphery of the substrate central part SC is divided into a region A in one side and a region B in the other side across a longitudinal center line L1 of the substrate 16. The circuit component IC in the charging circuit 10A is located in the region A, and the circuit component IC in the charging circuit 10B is located in the region B.

The region A is further divided into a region A1 and a region A2 across a central line L2 of the substrate 16 in a short direction, and the circuit component IC and the thermistor 15 are located in each of the regions A1 and A2.

In the first embodiment, the circuit components IC are classified in accordance with the respective maximum junction temperatures to be located in the region A1 or region A2. As described before, the maximum junction temperature is defined as the standard in the circuit component IC, but the maximum junction temperature differs depending upon the kind and function of the circuit component IC. For example, there is a tendency that the maximum junction temperature is relatively high in the DC to DC converter 11 or the power MOSFET 12 through which the power line passes, or the like, but the maximum junction temperature is relatively low in the USB controller 14 configured to control the charging device 1 or the like.

In the embodiment, the plurality of circuit components IC are classified into circuit components the maximum junction temperature of which is relatively high and circuit components the maximum junction temperature of which is relatively low. The circuit components the maximum junction temperature of which is relatively high are located in the region A1, and the circuit components the maximum junction temperature of which is relatively low are located in the region A2. The maximum junction temperature of the circuit component IC located in the region A1 may be made as 125°C, for example, and the maximum junction temperature of the circuit component IC located in the region A2 may be made as 105°C, for example.

The thermistor 15 is located between the heat generation source HIC of the substrate central part SC and each of the circuit components in the regions A1, A2. It should be noted that although omitted in illustration, the thermistor is located also in the DC to DC converter 11 as the heat generation source HIC.

Fig. 4 is a diagram showing temperature detection of a thermistor 15 according to a comparative example. In Fig. 4, a circuit component in the region A1 is called IC1, and a circuit component in the region A2 is called IC2.

As shown in Fig. 4, the thermistor 15 is located only in the region A2 in the comparative example, and further, is not located between the heat generation source HIC and the circuit component IC2, but is located in a position closer to the outside than the circuit component IS2 to the heat generation source HIC.

The generated heat of the heat generation source HIC in the substrate central part SC is transmitted to the surroundings via the substrate 16 where the heat generation part HIC is located.
The transmission way of the heat from the heat generation source HIC differs depending upon a position on the substrate 16, and therefore, in the thermistor 15 located on the region A2, it is difficult to detect a temperature rise of the circuit component IC1 located in the region A1.

Further, the thermistor 15 is located in a position closer to the outside than the circuit component IC2 in the region A2 to the heat generation source HIC. In the figure, the heat transmission path from the heat generation source HIC to each of the circuit components IC1, IC2 is shown by a broken arrow, but the thermistor 15 is not positioned on the heat transmission path from the heat generation source HIC to the circuit component IC2. Therefore, a timing when the thermistor 15 detects the heat transmitted from the heat generation source HIC gets possibly behind transmission of the heat to the circuit component IC2, and there is a possibility that the temperature rise of the circuit component IC2 cannot be detected quickly.

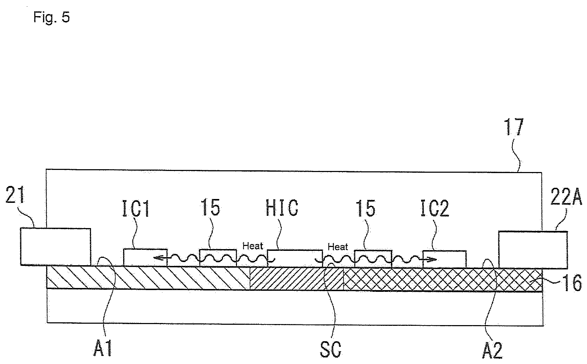

Fig. 5 is a diagram showing the temperature detection of the thermistors 15 in the first embodiment.

As shown in Fig. 5, in the first embodiment, the thermistor 15 is located between the heat generation source HIC and each of the circuit components IC1, IC2 in the regions A1, A2. That is, the thermistor 15 is located on a heat transmission path from the heat generation source HIC 15 to each of the circuit components IC1, IC2 in the regions A1, A2. Therefore, since the thermistor 15 can detect the heat of the heat generation source HIC prior to being transmitted to the circuit components IC1, IC2, it is possible to quickly detect the temperature rise generated in the circuit components IC1, IC2. In addition, locating the thermistor 15 in each of the regions A1, A2 facilitates the detection of the temperature rise in the circuit components IC1, IC2 in the regions A1, A2 respectively.

The USB controller 14 obtains a detection signal of each of the thermistors 15, and when the detected temperature exceeds a threshold value, controls operations of DC to DC converter 11 and the power MOSFET 12 to limit the supply of the charging current. Alternatively, the USB controller 14 may again perform the negotiation to the electric equipment 7 based upon the standard of USB PD to limit the supply of the charging current in the electric equipment 7-side. An example of a method for limiting the supply of the charging current may include a method in which the USB controller 14 performs hardware reset based upon the standard of USB PD. In addition, by changing a table for defining the supply amount in response to the negotiation with the electric equipment 7, the charging voltage or charging current of the electric equipment 7 can be reduced to reduce the supply amount temporarily. Further, the charging current to be capable of being supplied may be changed by changing the pullup resistance of the CC pin connected to the configuration channel line CC1/CC2. The heat to be generated in the heat generation source HIC is suppressed by limiting the supply of the charging current to the electric equipment 7-side to suppress a temperature of each of the circuit components IC1, IC2 from rising exceeding the maximum junction temperature. When the temperature to be detected by the thermistor 15 is below the threshold value, the USB controller 14 may release the supply limit of the charging current.

The threshold value of the thermistor 15 in each of the regions A1, A2 is determined based upon the maximum junction temperature of each of the circuit components IC1, IC2 located in the regions A1, A2 respectively. A threshold value TA1 of the thermistor 15 in the region A1 where the circuit component IC1 the maximum junction temperature is high is located is set to be higher than a threshold value TA2 of the thermistor 15 in the region A2 where the circuit component IC2 the maximum junction temperature is low is located. The threshold value may have allowance to be set to a temperature lower to some degree than the maximum junction temperature, and, for example, the threshold value TA1 in the region A1 may be set to 110°C and the threshold value TA2 in the region A2 may be set to 90°C.

An example in Fig. 3 shows a state where the circuit component IC is located in each of the regions A1, A2 one by one for descriptive purposes, but a plurality of circuit components IC may be located in each of the regions A1, A2. In that case, the whole circuit components IC may be divided into a group of circuit components the maximum junction temperature of which is relatively high and a group of circuit components the maximum junction temperature of which is relatively low to locate the circuit components divided into the same group to the same region. In addition, in a case where the maximum junction temperatures of the plurality of circuit components IC located in the same region differ, the threshold value may be set based upon the lowest maximum junction temperature. Therefore, one thermistor 15 may be located in one region, and it is not necessary to locate the thermistor 15 for each of the circuit components IC individually.

In addition, in regard to the number of the thermistors 15, there is shown an example where one thermistor 15 is located in each of the regions A1, A2, but not limited thereto, the location number of the thermistors 15 can be determined as needed such that the thermistors 15 are located on the heat transmission path from the heat generation source HIC to the circuit component IC in accordance with the number and the location of the circuit components IC.

The region B for locating the circuit components IC in the charging circuit 10B is also, as similar to the region A, divided into a region B1 for locating the circuit component IC the maximum junction temperature of which is high and a region B2 for locating the circuit component IC the maximum junction temperature of which is low, and the thermistors 15 are located on the heat transmission path from the heat generation source HIC to the circuit component IC in each of the regions B1, B2. A threshold value in accordance with the maximum junction temperature of the circuit component IC in each of the regions B1, B2 can be determined to the thermistor 15 in each of the regions B1, B2, as similar to the thermistor 15 in each of the regions A1, A2.

Although omitted in illustration, the backflow preventive circuit 30 and the circuit component IC of the EMC filter 40 can be also located in any of the regions A1, A2, B1, B2 on the substrate 16 in accordance with the maximum junction temperature of each of them.

In addition, although the detailed explanation is omitted, in a case where a thermistor is located to the heat generation source HIC itself and a junction temperature of the heat generation source HIC exceeds a threshold value determined in accordance with the maximum junction temperature , the USB controller 14 may limit the supply of the charging current.

As described above, the charging device 1 according to the embodiment comprises:
(1) the charging circuits 10A, 10B that supply the charging current to the battery 71 (the charged body) in the electric equipment 7;
   the plurality of circuit components IC that are located on the substrate 16 and configure the charging circuits 10A, 10B;
   the thermistor 15 (the temperature detecting element) located on the heat transmission path of the substrate 16 from the heat generation source HIC (the circuit component IC of the heat production source) to the other circuit component IC; and
   the USB controller 14 (the control part) that limits the supply of the charging current to the electric equipment 7 when the temperature detected by the thermistor 15 (the temperature detecting element) exceeds the threshold value.
   In the charging device 1, the circuit component IC such as the DC to DC converter 11 or the like may possibly generate heat at the charging. When the heat of the heat generation source HIC is transmitted to each of the circuit components IC via the substrate 16, the temperature of each of the circuit components IC also rises. The temperature rise of each of the circuit components IC changes with a distance from the heat generation source HIC or the like. The atmosphere temperature of the substrate 16 can be detected by locating the thermistor 15 on the substrate 16, but the junction temperature as the actual temperature of each of the circuit components IC possibly rises more than the detection temperature of the thermistor 15. Some of the circuit components IC are relatively low in the maximum junction temperature depending upon the kind. Therefore, the circuit component IC is possibly damaged due to the rise in temperature.
   According to the first embodiment, the heat of the heat generation source HIC can be detected before being transmitted to the circuit component IC by locating the thermistor 15 on the heat transmission path of the circuit component IC from the heat generation source HIC. Therefore, it is possible to appropriately detect the temperature rise generated in the circuit component IC. The USB controller 14 limits the supply of the charging current in accordance with the detection result of the thermistor 15, making it possible to prevent the damage of the circuit component IC.
(2) The substrate 16 has the plurality of regions A1, A2, B1, B2 formed thereon, the circuit component IC being located on each of the regions A1, A2, B1, B2,
   the thermistor 15 is located on the heat transmission path from the heat generation source HIC to the circuit component IC in each of the regions A1, A2, B1, B2, and
   the USB controller 14 limits the supply of the charging current to the electric equipment 7 when the temperature detected by the thermistor 15 exceeds the threshold value determined in accordance with the circuit component IC of each of the regions A1, A2, B1, B2. The method for the limit is a method based upon the USB PD standard, for example.
   The circuit component IC is located on the substrate 16 for each of the divided regions, and the threshold value of the thermistor 15 is determined in accordance with the circuit component IC in each of the regions A1, A2, B1, B2. Therefore, since it is not necessary to locate the thermistors 15 to all the circuit components IC individually, the number of the thermistors 15 can be reduced while appropriately detecting the temperature rise of the circuit component IC in each of the regions A1, A2, B1, B2 to prevent the damage.
(3) Each of the plurality of regions A1, A2, B1, B2 is formed in accordance with the maximum junction temperature of the circuit component IC.
   For example, even when the temperature rise occurs, the necessity/unnecessity of the limit of the supply of the charging current differs depending upon the maximum junction temperature of the circuit component IC. The circuit components IC are located by performing the region division in accordance with the maximum junction temperature, and therefore, the USB controller 14 can perform appropriate limit of the charging current in accordance with the circuit component IC.
(4) The heat generation source HIC is located on the substrate central part SC (the center of the substrate 16).

Thereby, the generated heat of the heat generation source HIC tends to be easily dispersed to the surroundings, making it possible to reduce the temperature rise in a portion where the heat generation source HIC is located.

### <Modification 1>

In the first embodiment, each of the plurality of regions A1, A2, B1, B2 is formed in accordance with the maximum junction temperature of the circuit component IC, but is not limited thereto, and, for example, a plurality of regions may be formed in accordance with an application of the circuit component IC.

For example, the circuit component IC in the control system of the USB controller 14 or the like has a tendency that the maximum junction temperature is lower than the circuit component IC in the power source system of the MOSFET or the like. Therefore, for example, the circuit component IC in the power source system of the power MOSFET 12 or the like may be located in the region A1 shown in Fig. 3 and the circuit component IC in the control system of the USB controller 14 or the like may be located in the region A2 shown in Fig. 3. In this way, by locating the circuit components IC of the same application into the same region, the wire setting of the power line, the communication line and the like is facilitated.

As described above, in the charging device 1 according to the modification 1,
(5) each of the plurality of regions A1, A2, B1, B2 is formed in accordance with the application of the circuit component IC.

Since the maximum junction temperature differs depending upon the application of the circuit component IC, the necessity/unnecessity of the limit of the supply of the charging current at the temperature rise differs. The circuit components IC are located by performing the region division in accordance with the applications of the circuit components IC, and therefore, the USB controller 14 can perform appropriate limit of the charging current in accordance with the circuit component IC.

### <Modification 2>

The first embodiment has explained an example where the plurality of regions A1, A2, B1, B2 each are formed to be adjacent to the substrate central part SC where the heat generation source HIC is positioned and the circuit component IC and the thermistor 15 are located in each of the regions A1, A2, B1, B2, but the present invention is not limited thereto. It is only required that the thermistor 15 can be located on the heat transmission path from the heat generation source HIC to the circuit component IC, and the regions on the substrate 16 may be formed as needed in accordance with an area of the substrate 16, the number of the circuit components IC or the like.

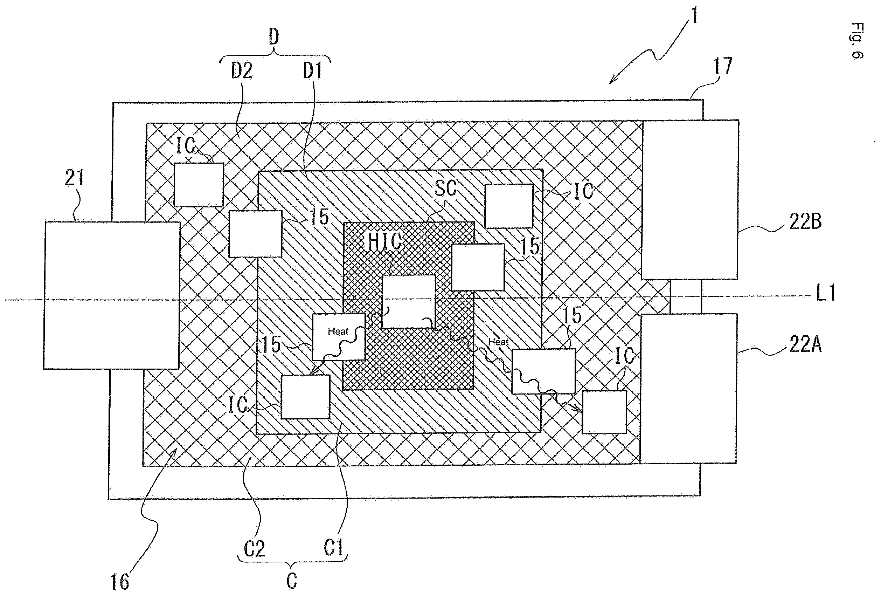

Fig. 6 is a diagram showing region division of the substrate 16 according to a modification 2. Fig. 6 shows a state where the USB cable 9 (refer to Fig. 1) connected to the electric equipment 7 is connected to the connector 22A.

As shown in Fig. 6, the substrate central part SC is, as similar to the first embodiment, defined as a region where the heat generation source HIC is located. As similar to the first embodiment, across the longitudinal center line L1 of the substrate 16, a region C in one side is defined as a region where the circuit component IC in the charging circuit 10A is located and a region D in the other side is defined as a region where the circuit component IC in the charging circuit 10B is located.

The region C is further divided into two regions, that is, a region C1 that is formed to surround and be adjacent to the substrate central part SC and a region C2 that is located in the radial outside of the region C1 and is separated from the substrate central part SC are formed. The circuit component IC, the maximum junction temperature of which is relatively high, of the plurality of circuit components IC is located in the region C1. The circuit component IC, the maximum junction temperature of which is relatively low, of the plurality of circuit components IC is located in the region C2. The thermistor 15 is, as similar to the embodiment, located between the heat generation source HIC and the circuit component IC in each of the regions, that is, on the heat transmission path from the heat generation source HIC to the circuit component IC in each of the regions as shown by an arrow.

Since the region 2 is positioned farther from the heat generation source HIC than the region C1, the heat of the heat generation source HIC is more difficult to be transmitted as compared to the region C1. Therefore, it is possible to suppress the temperature rise of the circuit component IC that is located in the region C2 and the maximum junction temperature of which is relatively low.

It should be noted that also the region D where the circuit components IC of the charging circuit 10B are, as similar to the region C, located is divided into the regions D1,D2, and the circuit component IC the maximum junction temperature of which is relatively high is located in the region D1 that surrounds and is adjacent to the substrate central part SC, and the circuit component IC the maximum junction temperature of which is relatively low is located in the region D2 in the radial outside of the region D1. The thermistor 15 is located on the heat transmission path from the heat generation source HIC to the circuit component IC in each of the regions D1, D2.

As described above, the charging device 1 according to the modification 2, (6) forms the regions C1, D2 (a first region) and the regions C2, D2 (a second region) that are positioned farther from the heat generation source HIC than the regions C1, D1 on the substrate, and the circuit components IC located in the regions C2, D2 have the maximum junction temperature lower than that of the circuit components IC located in the regions C1, D1.

When the regions C2, D2 in which the circuit components IC the maximum junction temperature of which is relatively low are located are located to be separated from the heat generation source HIC, it is possible to suppress the temperature rise of the circuit components IC the maximum junction temperature of which is relatively low.

### <Modification 3>

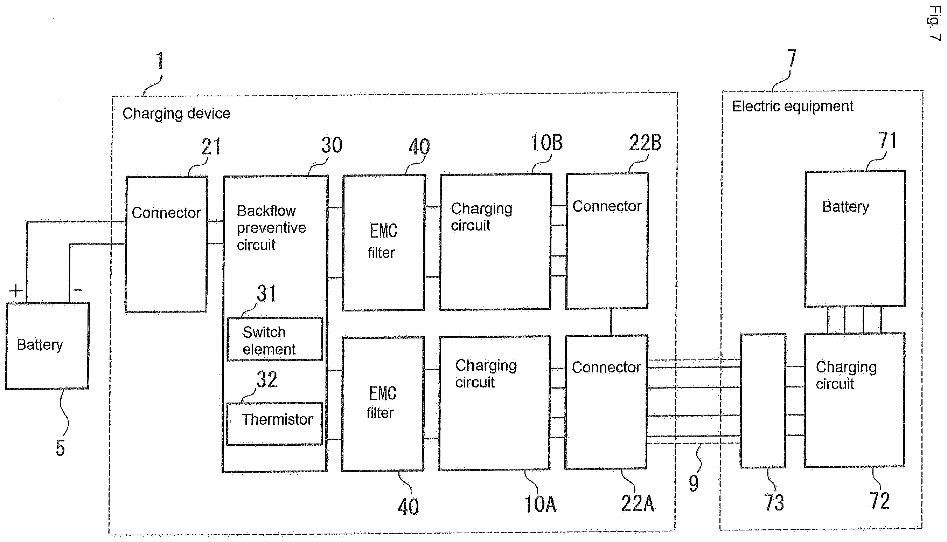

Fig. 7 is a block diagram showing a configuration of the charging device 1 according to a modification 3.

The explanation is made of the backflow preventive circuit 30 being provided with the switch element 31 such as the power MOSFET or the like in the first embodiment. In the modification 3, as shown in Fig. 7, a thermistor 32 is disposed in the backflow preventive circuit 30.

In the first embodiment, the explanation is made of the aspect where the USB controller 14 limits the supply of the charging current in response to the temperature rise of the circuit components IC configuring the charging circuits 10A, 10B, but, the temperature rise is possibly generated in the connector 21 as the connecting terminal to the battery 5 in the automobile or in the backflow preventive circuit 30, caused by, for example, input of an abnormal voltage of the battery 5 in the automobile or the like.

The modification 3 is designed such that, in a case where the thermistor 32 is provided in the backflow preventive circuit 30 and a temperature detected by the thermistor 32 is more than a predetermined value, the switch element 31 is operated to block the supply of the power to the charging circuits 10A, 10B.

The backflow preventive circuit 30 is controlled by the USB controller 14 of the charging circuits 10A, 10B, but since the current can be blocked in the backflow preventive circuit 30 without waiting for the control of the USB controller 14 at the input of the abnormal voltage to the charging device 1, it is possible to prevent the damage of the circuit components IC of the charging circuits 10A, 10B.

As described above, the charging device 1 according to the modification 3, (7) is provided with the backflow preventive circuit 30 (a protection circuit) that is provided between the battery 5 (an external power source) in the automobile and the charging circuits 10A, 10B and includes the switch element 31 and the thermistor 32 (the temperature detecting element), wherein
the backflow preventive circuit 30 blocks the supply of the charging current to the charging circuits 10A, 10B from the battery 5 in the automobile by the switch element 31 when the thermistor 32 detects a temperature more than a predetermined value.

By providing the thermistor 32 in the backflow preventive circuit 30, the supply of the charging current can be quickly blocked in a case where the heat is generated by input of the abnormal voltage or the like, to prevent the damage of the circuit components IS of the charging circuits 10A, 10B.

### <Second Embodiment>

Hereinafter, an explanation will be made of the charging device 1 according to a second embodiment.

In the first embodiment, the explanation is made of the control of the supply of the charging current in accordance with the generated heat in the circuit components IC configuring the charging circuits 10A, 10B, but in the second embodiment, the supply of the charging current is controlled in accordance with the voltage of the battery 5 in the automobile.

The configuration of the charging circuits 10A, 10B in the second embodiment will be explained with reference to Fig. 1 and Fig. 2 because of being similar to that of the first embodiment.

As described above, the charging device 1 charges the battery 71 in the electric equipment 7 using the power of the battery 5 in the automobile. During the driving of the automobile, the battery 5 in the automobile can be charged by an alternator, but, as the electric equipment 7 continues to be charged in a state where the battery 5 in the automobile is not charged, such as at the traffic jam or at the vehicle stopping, it leads to creating a possibility that the voltage of the battery 5 in the automobile is lowered to pose a problem for a drive of the automobile.

in the second embodiment, the USB controller 14 monitors the voltage of the battery 5 in the automobile to be input to the DC to DC converter 11. The USB controller 14 controls the power MOSFET 12 to block the supply of the charging current to the electric equipment 7 in a case where the voltage of the battery 5 in the automobile gets below the predetermined threshold value. The USB controller 14 controls the power MOSFET 12 to restart the supply of the charging current to the electric equipment 7 when the voltage of the battery 5 in the automobile is recovered to the threshold value or more. Alternatively, as described in the first embodiment, the USB controller 14 makes negotiation with the electric equipment 7, and after the negotiation is established, may restart the supply of the charging current. In this way, in the second embodiment, it is possible to prevent an influence on the drive of the automobile by a reduction in the voltage of the battery 5 in the automobile.

### <Third Embodiment>

Hereinafter, an explanation will be made of the charging device 1 according to a third embodiment.

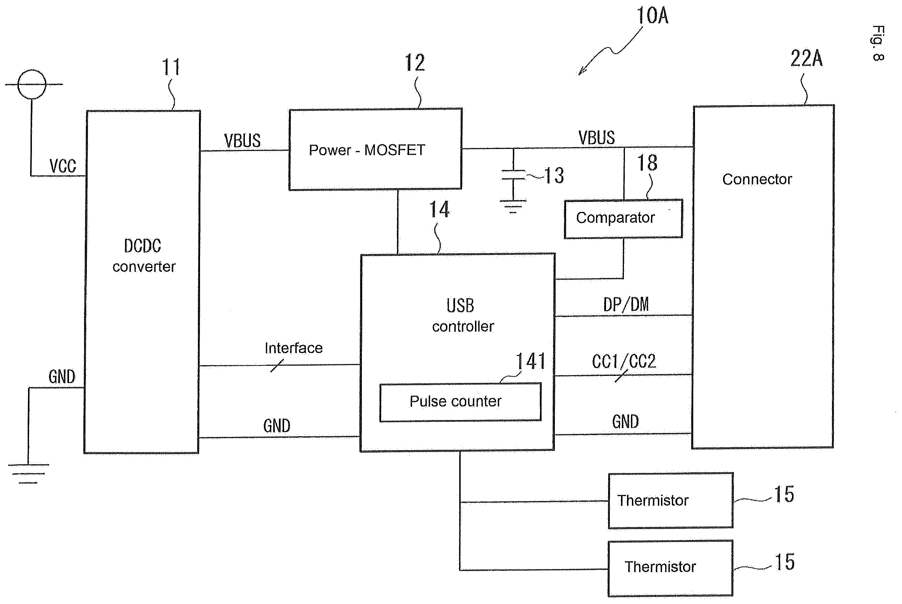

Fig. 8 is a block diagram showing a configuration of the charging circuit 10A according to the third embodiment.

As shown in Fig. 8, in the third embodiment, the charging circuit 10A is provided with a comparator 18 provided in the output side of the smoothing capacitor 13. The comparator 18 is configured of an operational amplifier, for example. The comparator 18 is connected to the USB controller 14, and an output signal of the comparator 18 is input to the USB controller 14.

As described before, the smoothing capacitor 13 smooths the ripple voltage to be outputted from the DC to DC converter 11. When the smoothing capacitor 13 degrades, the ripple voltage becomes large, which in some cases, possibly leads to damages or the like of the circuit component IC of the electric equipment 7 connected to the charging device 1.

The comparator 18 compares the output voltage of the smoothing capacitor 13 with a preset threshold value. The threshold value is defined using the charging voltage of the electric equipment 7 as a reference, and is a threshold value VH higher by a predetermined value than the charging voltage, and is a threshold value VL lower by a predetermined value than the charging voltage. The threshold value VH, VL is a value that indicates a possibility of an increase in the ripple voltage due to degradation of the smoothing capacitor 13.

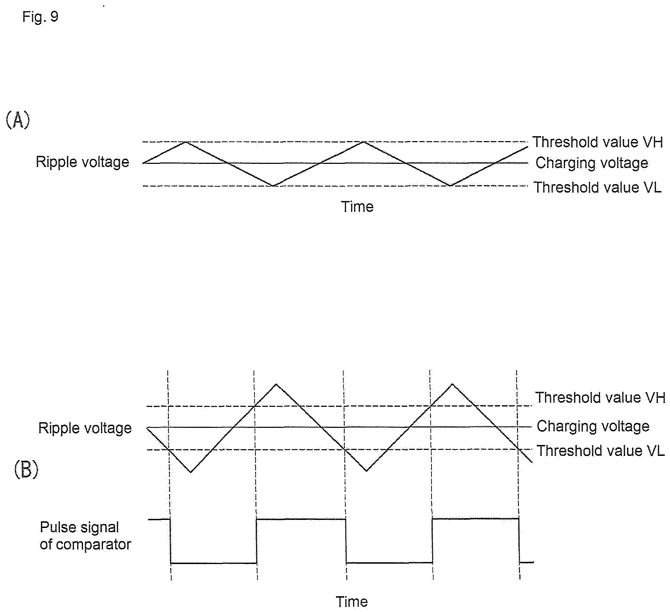

Fig. 9A is a graph showing an example of a ripple voltage at a normal time of the smoothing capacitor 13, and Fig. 9B is a graph showing an example of a ripple voltage at a degradation time of the smoothing capacitor 13, and showing a pulse signal to be outputted from the comparator 18.

As shown in Fig. 9A, the ripple voltage has a waveform in which a period rising up from the charging voltage and a period rising down from the charging voltage come periodically, but the rising up and rising down of the ripple voltage to be outputted at the normal time of the smoothing capacitor 13 do not reach the threshold value VH and the threshold value VL.

On the other hand, as shown in Fig. 9B, in a case where the smoothing capacitor 13 is not operated normally due to the degradation of the smoothing capacitor 13 or the like, the ripple voltage to be outputted from the smoothing capacitor 13 gets large to reach the threshold value VH and the threshold value VL. When the ripple voltage reaches the threshold value VH and the threshold value VL, the pulse signal is outputted from the comparator 18.

In the third embodiment, the USB controller 14 is, as shown in Fig. 8, provided with a pulse counter 141 that counts pulse signals input by the comparator 18. When the number of pulse signals counted by the pulse counter 141 exceeds a predetermined number of times, the USB controller 14 controls the power MOSFET 12 to block the supply of the charging current to the electric equipment 7.

The predetermined number of times may be set to the number of times by which the degradation of the smoothing capacitor 13 can be determined. In some cases the pulse signals are input due to noises or the like. The USB controller 14 refers to an input interval of pulse signals, and only in a case where the pulse signals are successively input by a predetermined number of times, the USB controller 14 blocks the supply of the charging current.

For example, in a case where the pulse signals are successively input twice, the pulse counter 141 counts "2", but in a case where the input of the pulse signal is once interrupted at the next interval, the pulse counter 141 counts "1" by the countdown. Further, at the next interval, when the pulse signal is not input, the pulse counter 141 counts "0" by the further countdown, but when the pulse signal is again input, the pulse counter 141 counts "2" by the count-up. In this way, in a case where the pulse signals are not successively input after the pulse signal is input to start the count-up, the supply of the charging current to the electric equipment 7 is prevented from being erroneously blocked due to noises or the like by the countdown.

### <Other Embodiments>

In the embodiment described above ,the DC to DC converter 11 is provided as a circuit component IC separated from the USB controller 14, but a circuit component IC in which the DC to DC converter 11 and the USB controller 14 are integrated may be used.

Alternatively the control circuit of the charging device 1 may be configured to be united to the power source circuit

The embodiments and the modifications of the present invention are described thus far, but the present invention is not limited to the embodiments and the modifications, and can be changed as needed within the range of the technical concept of the invention.

### Reference Signs List

- 1: Charging device
- 5: Battery
- 7: Electric equipment
- 71: Battery
- 72: Charging circuit
- 73: Connector
- 9: USB cable
- 10A, 10B: Charging circuit
- 11: DC to DC converter
- 12: POWER MOSFET
- 13: Smoothing capacitor
- 14: USB controller
- 141: Pulse counter
- 15: Thermistor
- 16: Substrate
- 17: Case
- 18: Comparator
- 21: Connector
- 22A, 22B: Connector
- 30: Backflow preventive circuit
- 31: Switch element
- 32: Thermistor
- 40: EMC filter
- IC, IC1, IC2: Circuit component
- HIC: Heat generation source
- SC: Substrate central part
- A, A1, A2: Region
- B, B1, B2: Region
- C, C1, C2: Region
- D, D1, D2: Region
- L1: Longitudinal direction center line
- L2: Short direction center line

## Claims

1. A charging device, comprising:
a charging circuit (10A, 10B) that supplies a charging current to a charged body;
a plurality of circuit components (IC, IC1, IC2) that are located on a substrate (16) and configure the charging circuit (10A, 10B);
a temperature detecting element (15) located on a heat transmission path of the substrate (16) from the circuit component (IC1) of a heat generation source (HIC) to the other circuit component (IC2); and
a control part that limits the supply of the charging current to the charged body when a temperature detected by the temperature detecting element (15) exceeds a threshold value.

2. The charging device according to claim 1, wherein
the substrate (16) has a plurality of regions (A, B, C, D) formed on the substrate, the circuit component (IC, IC1, IC2) being located on each of the regions (A, B, C, D),
the temperature detecting element (15) is located on the heat transmission path from the circuit component (IC, IC1, IC2) of the heat generation source (HIC) to the circuit component (IC, IC1, IC2) in each of the regions (A, B, C, D), and
the control part limits the supply of the charging current to the charged body when the temperature detected by the temperature detecting element (15) exceeds the threshold value determined in accordance with the circuit component (IC, IC1, IC2) in each of the regions.

3. The charging device according to claim 2, wherein
the plurality of regions (A, B, C, D) are formed in accordance with a maximum junction temperature of the circuit component (IC, IC1, IC2).

4. The charging device according to claim 2, wherein
the plurality of regions (A, B, C, D) are formed in accordance with an application of the circuit component (IC, IC1, IC2).

5. The charging device according to any of claims 2 to 4, wherein
the substrate (16) has a first region and a second region formed on the substrate (16), the second region being positioned farther from the heat generation source (HIC) than the first region, and
the maximum junction temperature of the circuit component (IC, IC1, IC2) located in the second region is lower than the maximum junction temperature of the circuit component (IC, IC1, IC2) located in the first region.

6. The charging device according to any of claims 1 to 5, wherein
the circuit component (IC, IC1, IC2) as the heat generation source (HIC) is located in the center of the substrate (16).

7. The charging device according to any of claims 1 to 6, further, comprising:
a protection circuit that is provided between an external power source and the charging circuit (10A, 10B) and includes a switch element (31) and a temperature detecting element (15) wherein
when the temperature detecting element (15) detects a temperature equal to or more than a predetermined value, the protection circuit blocks the supply of the charging current to the charging circuit from the external power source by the switch element (31).
